# EUROPÄISCHE PATENTANMELDUNG

(11) **EP 4 677 995 A1**
(43) Veröffentlichungstag der Anmeldung: **14.01.2026**
(21) Anmeldenummer: 25184359.5
(22) Anmeldetag: 23.06.2025
(51) Int. Cl.: A01F 15/08, B30B 9/30

(54) **LANDWIRTSCHAFTLICHE BALLENPRESSE**

(30) Priorität: 10.07.2024 DE 102024119535
(71) Anmelder: Usines CLAAS France S.A.S, 57140 St. Rémy / Woippy (FR)
(72) Erfinder: Rongvaux, Laurent, 54800 Tronville (FR); Grosnickel, Rémi, 57530 Colligny (FR); Obellianne, Steve, 57530 Courcelles-Chaussy (FR)
(74) Vertreter: CLAAS Gruppe

(57) **Zusammenfassung**

Eine landwirtschaftliche Ballenpresse (1) umfasst einen Presskanal (8), einen in dem Presskanal (8) zum Ausüben einer Presskraft auf in dem Presskanal (8) befindliches Gut beweglichen Kolben (9) und wenigstens einen Sensor (20) zum Erfassen einer mit der ausgeübten Presskraft verknüpften Messgröße, der als gedruckter Sensor ausgeführt ist

## Beschreibung

Die vorliegende Erfindung betrifft eine landwirtschaftliche Ballenpresse mit einem Presskanal und einem in dem Kanal zum Ausüben einer Presskraft auf zu verdichtendes Erntegut hin und her bewegbaren Kolben, wie z.B. in EP 1 516 527 B1 beschrieben.

Die Antriebskräfte, die auf den Kolben ausgeübt werden müssen, um das Erntegut über den gesamten Kolbenquerschnitt hinweg ausreichend zu verdichten, sind so hoch, das sie in dem Fall, dass das Erntegut ungleichmäßig über den Kanalquerschnitt verteilt ist, zum Auftreten von Biegemomenten führen können, die stark genug sind, um Schäden an der Presse hervorzurufen.

In EP 1 516 527 B1 ist deswegen vorgeschlagen, am Presskolben Kraftsensoren sowohl horizontal als auch vertikal gegeneinander versetzt anzuordnen. Mit diesen Sensoren ist es möglich, eine Ungleichverteilung des Ernteguts über den Kanalquerschnitt sowohl in horizontaler als auch vertikaler Richtung zu erkennen, so dass ein Fahrer der Ballenpresse geeignete Gegenmaßnahmen treffen kann, wie etwa die Position der Ballenpresse in Bezug auf einen Erntegutschwad zu verändern, damit mehr Erntegut in einen Teil des Kanalquerschnitts gelangt, an dem eine im Vergleich zu anderen Teilen des Kanalquerschnitts niedrigere Presskraft gemessen wurde.

Die als Messbolzen in einer Verbindung zwischen zwei Teilen einer Pleuelstange ausgebildeten Sensoren sind der vollen Presskraft ausgesetzt; dementsprechend belastbar müssen sie sein, was sie schwer und kostspielig macht. Eine eventuelle Reparatur ist durch ihre schwer zugängliche Einbauposition mühsam.

Aufgabe der Erfindung ist daher, eine Ballenpresse zu schaffen, die eine einfachere und kostengünstigere Überwachung der Verdichtungskräfte erlaubt.

Die Aufgabe wird gelöst, indem bei einer landwirtschaftlichen Ballenpresse mit einem Presskanal, einem in dem Kanal zum Ausüben einer Presskraft auf in dem Presskanal befindliches Gut beweglichen Kolben und wenigstens einem Sensor zum Erfassen einer mit der ausgeübten Presskraft verknüpften Messgröße der wenigstens eine Sensor als gedruckter Sensor ausgeführt ist.

Ein solcher Sensor eignet sich zur Anbringung an der Oberfläche eines auf die in ihm wirkenden Kräfte zu überwachenden Objekts, indem er auf eine durch diese Kräfte hervorgerufene Deformation des Objekts anspricht. Gleichzeitig garantiert die oberflächliche Anbringung eine leichte Zugänglichkeit des Sensors.

Gedruckte Sensoren sind an sich bekannt, eine detaillierte Beschreibung findet sich z.B. in EP 3 443 294 B1. Für die vorliegende Erfindung geeignet ist insbesondere ein Sensor mit einer gedruckten Schicht, die eine nichtleitende Matrix und in die Matrix eingebettete leitfähige Partikel umfasst. Indem die leitfähigen Partikel einander stellenweise berühren, verleihen sie der Schicht eine endliche elektrische Leitfähigkeit. Die Empfindlichkeit eines solchen Sensors auf Verformung basiert darauf, dass Kontakte zwischen den leitfähigen Partikeln weniger eng werden, wenn die Schicht gedehnt und die Partikel darin auseinandergezogen werden, bzw. dass die Partikel gegeneinandergedrückt und die Kontakte enger werden, wenn die Schicht gestaucht wird.

Vorzugsweise ist der wenigstens eine Sensor am Kolben oder an einer Presskraft auf den Kolben übertragenden Pleuelstange angebracht, um unmittelbar die Beanspruchung des Kolbens zu erfassen.

Alternativ oder ergänzend kann der wenigstens eine Sensor oder ein weiterer Sensor an einer sich in Bewegungsrichtung des Kolbens erstreckenden Wand des Presskanals angeordnet sein. Ein solcher Sensor kann insbesondere eine Kraft quer zur Bewegungsrichtung des Kolbens erfassen, die das Gut im Presskanal auf die Kanalwände ausübt, wenn es von dem Kolben zusammengepresst wird.

Die Wände des Presskanals umfassen herkömmlicherweise eine Mehrzahl von Pressklappen, die sich in der Bewegungsrichtung des Kolbens erstrecken und durch Spalte unterteilt sind, durch die Werkzeuge wie etwa eine Bindenadel in den Presskanal eingeführt werden können, um Bindegarn um den Ballen zu schlingen. Eine solche Pressklappe kommt - insbesondere an ihrer vom Presskanal abgewandten Seite - auch als Unterlage des wenigstens einen gedruckten Sensors in Betracht. Wenn die Pressklappen durch einen sich um den Presskanal und die Pressklappen erstreckenden Rahmen abgestützt sind, kommt auch der Rahmen als Unterlage für den wenigstens einen Sensor in Betracht.

Der Rahmen kann als Widerlager für ein Stellglied dienen, durch das die Pressklappe quer zur Bewegungsrichtung des Kolbens verstellbar ist. Durch die Bewegung der Pressklappe kann ein Ballen noch nachverdichtet werden, wenn die Verdichtung durch den Kolben bereits abgeschlossen ist.

Es kann eine Anzeigeeinheit zum Anzeigen der von dem Sensor erfassten Messgröße vorgesehen sein, um es etwa einem Fahrer der Ballenpresse zu ermöglichen, deren Betrieb an die Werte der Messgröße anzupassen.

Des weiteren kann eine Steuereinheit vorgesehen sein, um die Presskraft des Kolbens anhand der erfassten Messgröße zu steuern, etwa um diese zu reduzieren oder den betrieb des Kolbens zu stoppen, wenn der Wert der Messgröße auf eine unerwünscht hohe Verformung des den Sensor tragenden Bauteils hinweist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung einer Ballenpresse;
- Fig. 2: einen Presskolben der Ballenpresse und dessen Pleuelstangen;
- Fig. 3: eine Draufsicht auf einen Sensor; und
- Fig. 4: einen Schnitt durch den Presskanal der Ballenpresse.

Fig, 1 zeigt eine schematische Darstellung einer Ballenpresse 1 in der Seitenansicht, die von einem nicht dargestellten Zugfahrzeug gezogen und über eine Zapfwelle 2 angetrieben wird.

Frontseitig ist der Ballenpresse 1 ein Erntegutaufnehmer 3 zugeordnet, der über Stützradanordnungen 4 auf dem Boden höhenbeweglich geführt wird. Der Erntegutaufnehmer 3 verfügt zur Aufnahme des auf dem Boden liegenden Erntegutes über eine in Pfeilrichtung drehangetriebene Pickup-Trommel 5, die das Erntegut oberschlächtig in einen Zuführkanal 6 befördert, wo es von einem Förderer 7 in den rechteckförmigen Presskanal 8 weiterbefördert wird.

Am Kopfende des Presskanals 8 befindet sich ein Presskolben 9, der von der Zapfwelle 2 über ein Verteilergetriebe 17 mit einem oder zwei an entgegengesetzten Enden einer durch das Verteilergetriebe 17 verlaufenden Welle befestigten, exzentrisch rotierenden Armen 18 und einer mit jedem Arm 18 verbundenen Pleuelstange 19 eine Oszillationsbewegung des Kolbens 9 entlang des Presskanals 8 antreibt.

Das Verteilergetriebe 17 synchronisiert die Bewegungen des Förderers 7 und des Presskolbens 9 derart, dass der Förderer immer dann Erntegut in den Presskanal 8 schiebt, wenn der Presskolben sich im vorderen Bereich seiner Bahn befindet und hinter ihm Platz im Presskanal 8 frei ist, um das geförderte Erntegut aufzunehmen. In einer anschließenden Bewegung des Presskolbens 9 nach hinten wird das zugeführte Erntegut gegen einen bereits in dem rechteckförmigen Presskanal 8 befindlichen und verdichteten Erntegutstrang gepresst.

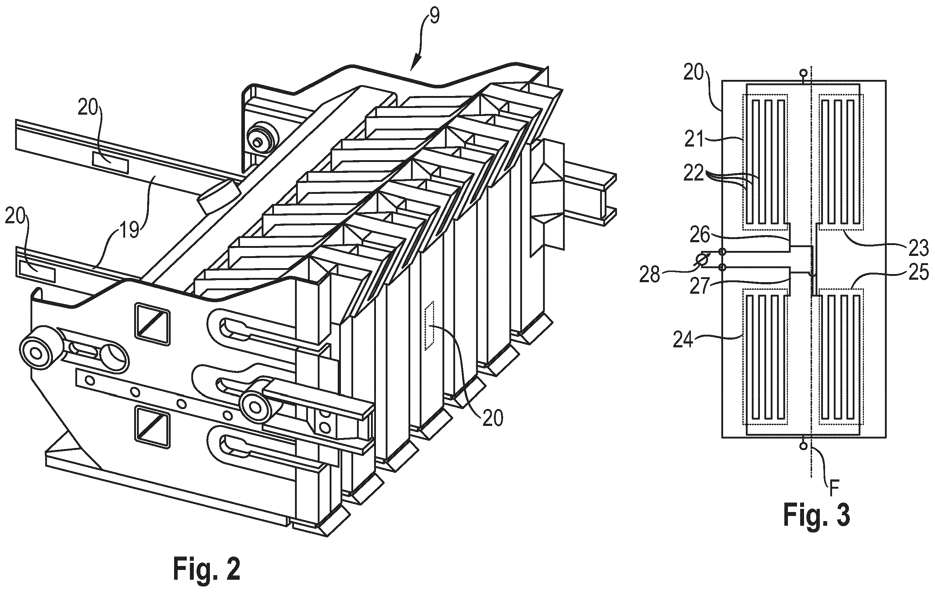

Fig. 2 zeigt den Presskolben 9, hier mit zwei Pleuelstangen 19. Die Pleuelstangen 19 haben jeweils einen in etwa rechteckigen Querschnitt. Die Höhe des Rechtecks ist größer ist als die Breite, was zur Folge hat, dass die Pleuelstange unter einer Längsbelastung zu einer Verbiegung in Breitenrichtung neigt. Um eine solche Verbiegung zu erfassen, sind gedruckte Sensoren 20 jeweils an wenigstens einer Oberfläche der Pleuelstangen 19 angebracht, die quer zur Richtung ihres geringsten Flächenträgheitsmoments verläuft, hier also auf den Breitseiten der rechteckigen Pleuelstangen 19.

Alternativ oder ergänzend können Sensoren 20 an biegebelasteten Bereichen des Presskolbens 9 selber vorgesehen sein. Wenn ein solcher Sensor 20 wie in Fig. 2 skizziert an der Stirnfläche des Kolbens 9 vorgesehen ist, sollte er zum Schutz an deren vom Pressgut abgewandter Seite angeordnet sein.

Die Sensoren 20 umfassen jeweils wenigstens ein Widerstandselement 21 mit einer als langer Streifen strukturierten gedruckten Schicht aus in einer nichtleitenden Matrix eingebetteten leitfähigen Partikeln. Die Längsrichtung des Streifens stimmt mit derjenigen der Pleuelstange 19 überein; typischerweise und wie in Fig. 3 gezeigt, setzt sich der Streifen aus einer großen Zahl von untereinander in Reihe verbundenen Abschnitten 22 zusammen. Indem diese hier nebeneinander in der Längsrichtung der Pleuelstange 19 orientiert sind, erfahren sie jeweils dieselbe Dehnung oder Stauchung.

Um eine aus der Dehnung oder Stauchung resultierende Widerstandsänderung mit hoher Empfindlichkeit nachweisen zu können, ist es gebräuchlich, ein dehnungsempfindliches Widerstandselement 21 mit anderen Widerständen 23-25 in einer Brücke zu verschalten, in der je zwei Widerstände, hier 21 und 23 bzw. 24 und 25, in Reihe verbunden sind und Mittenpunkte 26, 27 zwischen den jeweils in Reihe verbundenen Widerständen über ein Messinstrument 28 verbunden sind. Fig. 3 zeigt schematisch eine solche Brücke. Wenn der gesamte Sensor 20 an einer Seite der Pleuelstange 19 angebracht ist, können alle drei anderen Widerstandselemente 23-25 dehnungsunempfindlich sein; um das Messsignal zu vergrößern, weist vorzugsweise das Widerstandselement 24 dieselbe Dehnungsempfindlichkeit auf wie das Widerstandselement 21.

Einer Weiterbildung zufolge ist der Sensor 20 entlang einer Linie F faltbar, so dass die Hälften auf verschiedenen Seiten der Linie F an gegenüberliegenden Breitseiten einer Pleuelstange platziert werden können. Da dann die Widerstandselemente 21, 24 immer dann einer Dehnung ausgesetzt sind, wenn die Elemente 23, 25 gestaucht werden, und umgekehrt, kann hier ein maximales Messignal erzielt werden, wenn alle Widerstandselemente dieselbe Dehnungsempfindlichkeit aufweisen.

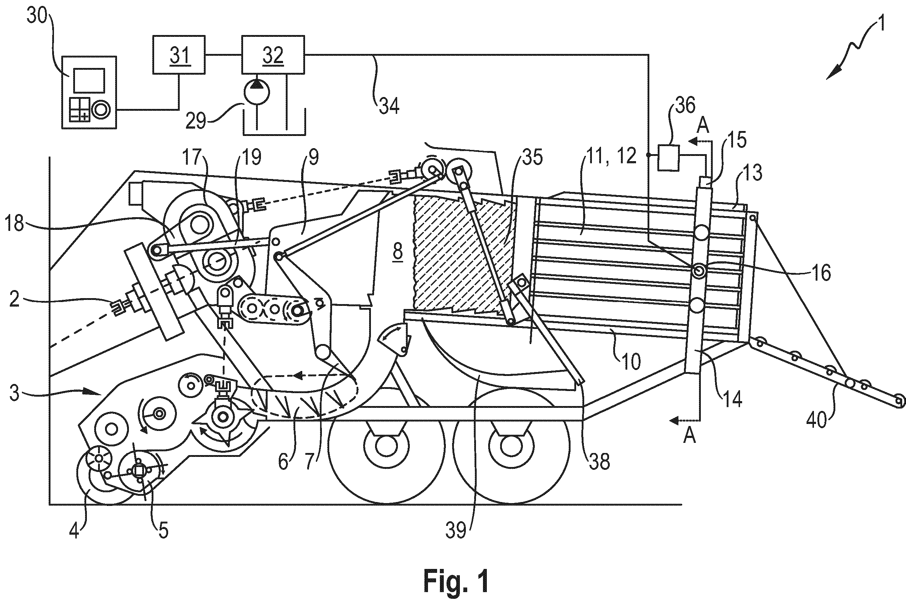

Das vom Messinstrument 28 erzeugte Messsignal kann von einer Steuervorrichtung 31 (s. Fig. 1) genutzt werden, um bei Überschreitung einer zulässigen Höchstlast das an der Zapfwelle 2 übertragene Drehmoment zu drosseln oder eventuell einen Nothalt der Ballenpresse 1 auszulösen. Des weiteren kann es an einem Bedienterminal 30 angezeigt werden, um einem Fahrer die Möglichkeit zu geben, zu entscheiden, ob und ggf. wie das Drehmoment gedrosselt werden sollte.

Wieder bezogen auf Fig. 1 verläuft der Presskanal 8 in einer in Pressrichtung P geneigten Ebene und umfasst einen starren Presskanalboden 10, zwei seitliche schwenkbewegliche Pressklappen 11, 12 und eine schwenkbewegliche obere Pressklappe 13.

Auf einem um den Presskanal 8 angeordneten Rahmen 14 befinden sich noch obere und seitliche Anpresseinrichtungen 15, 16. Mittels der Anpresseinrichtungen 15, 16 können die damit in Verbindung stehende obere Pressklappe 13 und die seitlichen Pressklappen 11, 12 so bewegt werden, dass dadurch die Querschnittsfläche des Presskanals 8 in Förderrichtung gesehen verringert wird, so dass zusätzlich zur Presskraft des Presskolbens 9 durch die Verengung der Querschnittsfläche des Presskanals 8 eine zusätzliche Presskraft auf den sich im Presskanal 8 befindenden Erntegutstrang ausgeübt wird, um die maximal mögliche Pressdichte des Ballens zu erreichen.

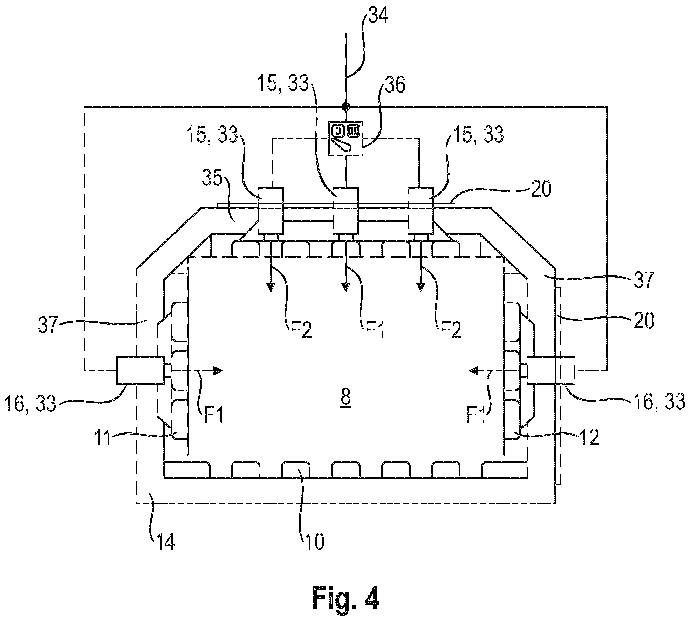

Wie in Fig. 4 gezeigt, können die Anpresseinrichtungen 15, 16 als hydraulische Zylinder 33 ausgeführt sein, wobei die Anzahl der Zylinder an jeder Pressklappe 11, 12, 13 des Presskanals 8 oder deren kumulative Querschnittsfläche proportional zur Breite der entsprechenden Wände gewählt sein kann.

Die Pressdruckeinstellung der Anpresseinrichtungen 15, 16 erfolgt mittels einer Bordhydraulik 29 (s. Fig. 1), die den Öldruck in den Anpresseinrichtungen 15, 16 regelt. Die Einstellung erfolgt über ein Bedienterminal 30, welches mit einer elektronischen Steuervorrichtung 31 zur Steuerung eines Ventilblocks 32 der Bordhydraulik 29 in Verbindung steht. Vom Ventilblock 32 zu den Zylindern 33 erstreckt sich eine gemeinsame Leitung 34.

Wenn alle Zylinder 33 über diese Leitung mit demselben Hydraulikdruck beaufschlagt werden, genügt ein einziger Sensor 20, der z.B. an einem horizontalen oberen Schenkel 35 des Rahmens 14 angebracht ist, um eine aus dem Druck der Zylinder 33 resultierende Deformation des Rahmens 14 zu überwachen und z.B. eine Herabsetzung des Drucks zu veranlassen, wenn diese einen kritischen Wert erreicht.

Wenn wie in Fig. 4 gezeigt, ein Umschaltventil 36 vorgesehen ist, das es erlaubt, einzelne Zylinder der oberen Anpresseinrichtung 15 von der Druckzufuhr abzuschneiden, kann die Deformation der seitlichen Schenkel 37 des Rahmens 14 ein kritisches Maß erreichen, bevor dies am horizontalen Schenkel 35 geschieht. In diesem Fall kann zweckmäßigerweise ein weiterer Sensor 20 an wenigstens einem der seitlichen Schenkel 37 vorgesehen sein.

Erreicht der Erntegutstrang eine vorgegebene Länge, erfolgt der Bindevorgang mittels Bindegarn durch an Nadelschwingen 38 (s. Fig. 1) angeordnete Bindenadeln 39 sowie oberhalb des Presskanals 8 angebrachte, mit den Bindenadeln 39 zusammenwirkende Knotereinrichtungen. Der fertig gepresste und gebundene Ballen wird über eine Abgaberutsche 40 auf dem Feld abgelegt.

### Bezugszeichen

1 Ballenpresse
2 Zapfwelle
3 Erntegutaufnehmer
4 Stützradanordnung
5 Pickup-Trommel
6 Zuführkanal
7 Förderer
8 Presskanal
9 Presskolben
10 Presskanalboden
11 seitliche Presswand
12 seitliche Presswand
13 obere Pressklappe
14 Pressring
15 Anpresseinrichtung
16 Anpresseinrichtung
17 Verteilergetriebe
18 Arm
19 Pleuelstange
20 Sensor
21 Widerstandselement
22 geradliniger Abschnitt
23 Widerstandselement
24 Widerstandselement
25 Widerstandselement
26 Mittenpunkt
27 Mittenpunkt
28 Messinstrument
29 Bordhydraulik
30 Bedienterminal
31 Steuervorrichtung
32 Ventilblock
33 Zylinder
34 Leitung
35 oberer Schenkel
36 Umschaltventil
37 seitlicher Schenkel

## Patentansprüche

1. Landwirtschaftliche Ballenpresse (1) mit einem Presskanal (8), einem in dem Presskanal (8) zum Ausüben einer Presskraft auf in dem Presskanal (8) befindliches Gut beweglichen Kolben (9) und wenigstens einem Sensor (20) zum Erfassen einer mit der ausgeübten Presskraft verknüpften Messgröße, **dadurch gekennzeichnet, dass** der wenigstens eine Sensor (20) als gedruckter Sensor ausgeführt ist.

2. Landwirtschaftliche Ballenpresse (1) nach Anspruch 1, bei der eine gedruckte Schicht (21) des Sensors (20) eine nichtleitende Matrix und in die Matrix eingebettete leitfähige Partikel umfasst.

3. Landwirtschaftliche Ballenpresse (1) nach einem der vorhergehenden Ansprüche, bei der der wenigstens eine Sensor (20) am Kolben (9) oder an einer Presskraft auf den Kolben (9) übertragenden Pleuelstange (19) angebracht ist.

4. Landwirtschaftliche Ballenpresse (1) nach einem der vorhergehenden Ansprüche, bei der der wenigstens eine Sensor (20) an einer sich in Bewegungsrichtung des Kolbens (9) erstreckenden Wand des Presskanals (8) angeordnet ist.

5. Landwirtschaftliche Ballenpresse (1) nach Anspruch 4, bei der die Wand eine den Presskanal (8) begrenzende Pressklappe (11,12,13) und einen sich um den Presskanal (8) und die Pressklappe (11,12,13) erstreckenden Rahmen (14) umfasst, und dass der wenigstens eine Sensor (20) an der Pressklappe (11,12,13) oder dem Rahmen (14) befestigt ist.

6. Landwirtschaftliche Ballenpresse (1) nach Anspruch 5, bei der die Pressklappe (11, 12, 13) durch ein zwischen dem Rahmen (14) und der Pressklappe (11,12,13) angeordnetes Stellglied (33) quer zur Bewegungsrichtung des Kolbens (9) verstellbar ist.

7. Landwirtschaftliche Ballenpresse (1) nach einem der vorhergehenden Ansprüche, ferner mit einer Anzeigeeinheit (30) zum Anzeigen der von dem Sensor (20) erfassten Messgröße.

8. Landwirtschaftliche Ballenpresse (1) nach einem der vorhergehenden Ansprüche, ferner mit einer Steuereinheit (31) zum Steuern der Presskraft des Kolbens (9) oder eines Stellglieds (33) anhand der erfassten Messgröße.
